# FASCICULE DE BREVET EUROPEEN

(11) **EP 3 414 299 B1**
(45) Date de publication et mention de la délivrance du brevet: **04.12.2019**
(21) Numéro de dépôt: 17708858.0
(22) Date de dépôt: 10.02.2017
(51) Int. Cl.: C09K 11/06

(54) **MATÉRIAUX MÉCANO-LUMINESCENTS ET MÉTHODE DE FABRICATION DESDITS MATÉRIAUX**
MECHANOLUMINESZENZMATERIALIEN UND VERFAHREN ZUR HERSTELLUNG DIESER MATERIALIEN
MECHANOLUMINESCENCE MATERIALS AND METHOD FOR MANUFACTURING SAID MATERIALS

(30) Priorité: 11.02.2016 FR 1600232
(43) Date de publication de la demande: 19.12.2018
(73) Titulaire: Universite D'Angers, 49035 Angers (FR); Centre National de la Recherche Scientifique, 75016 Paris (FR); Consiglio Nazionale Delle Ricerche - CNR, 00185 Roma (IT)
(72) Inventeur: TOMA, Oksana, 49100 Angers (FR); MERCIER, Nicolas, 49045 Angers Cedex (FR); BOTTA, Chiara, 20133 Milan (IT)
(74) Mandataire: Novagraaf Technologies
(86) Numéro de dépôt international: PCT/FR2017/050305
(87) Numéro de publication internationale: WO 2017/137707

(56) Documents cités:
- OKSANA TOMA ET AL: "Aggregation induced phosphorescent N-oxyde-2,2'-bipyridine bismuth complexes and polymorphism-dependent emission", DALTON TRANSACTIONS: THE INTERNATIONAL JOURNAL FOR INORGANIC, ORGANOMETALLIC AND BIOINORGANIC CHEMISTRY, vol. 44, no. 33, 20 juillet 2015 (2015-07-20), pages 14589-14593, XP055327787, GB ISSN: 1477-9226, DOI: 10.1039/C5DT01801C
- DE-LIANG LONG ET AL: "Lanthanum Coordination Networks Based on Unusual Five-Connected Topologies", JOURNAL OF THE AMERICAN CHEMICAL SOCIETY, vol. 123, no. 14, 16 mars 2001 (2001-03-16), pages 3401-3402, XP055032977, ISSN: 0002-7863, DOI: 10.1021/ja0030461
- OKSANA TOMA ET AL: "Protonated N-oxide-4,4'-bipyridine: from luminescent BiIII complexes to hybrids based on H-bonded dimers or H-bonded open 2D square supramolecular networks", CRYSTENGCOMM, vol. 15, no. 42, 12 septembre 2013 (2013-09-12), page 8565, XP055327686, DOI: 10.1039/c3ce41579a
- ROBERT J. HILL ET AL: "New Approaches to the Analysis of High Connectivity Materials: Design Frameworks Based upon 4 4 - and 6 3 -Subnet Tectons", ACCOUNTS OF CHEMICAL RESEARCH., vol. 38, no. 4, 31 mars 2005 (2005-03-31), pages 335-348, XP055327700, US ISSN: 0001-4842, DOI: 10.1021/ar040174b
- OKSANA TOMA ET AL: "N -Methyl-4,4'-bipyridinium and N -Methyl- N' -oxide-4,4'-bipyridinium Bismuth Complexes - Photochromism and Photoluminescence in the Solid State", EUROPEAN JOURNAL OF INORGANIC CHEMISTRY., vol. 2013, no. 7, 10 janvier 2013 (2013-01-10), pages 1113-1117, XP055327710, DE ISSN: 1434-1948, DOI: 10.1002/ejic.201201233

## Description

### 1. Domaine de l'invention.

L'invention se rapporte au domaine des matériaux luminescents et plus particulièrement aux matériaux mécano-luminescents.

### 2. Etat de l'art.

De multiples applications existent et qui utilisent des propriétés luminescentes de matériaux. Des applications sont largement connues du grand public dans les domaines de l'éclairage et de l'affichage, par exemple. D'autres applications sont plus spécifiques et visent, toujours à titre d'exemple, à permettre un marquage visuel. Ce type de marquage peut s'appliquer à un usage médical, avec notamment la capacité à réaliser et mettre en œuvre des marqueurs luminescents pour suivre un développement cellulaire in vitro. De tels matériaux luminescents sont le plus souvent obtenus par des opérations de synthèse chimique.

La publication scientifique « Aggregation induced phosphorecent N-oxyde-2,2'-bipyridine bismuth complexes and polymorphism-dependent émission » (Nicolas Mercier,.. ; Dalton Transactions 2015) décrit des propriétés luminescentes d'un complexe de bismuth bipyridine N-oxyde.

Des matériaux existent en outre et permettent de moduler la luminescence qui leur est propre par application d'une contrainte mécanique (pression, friction, par exemple). Ces matériaux sont dit mécano-luminescents. Ils sont notamment utilisés dans des applications d'authentification de document, en particulier fiduciaires. La demande de brevet internationale WO2014/090839 A1 («Method for checking the authenticity of a security document », OBERTHUR FIDUCIAIRE, 11 décembre 2013) décrit un procédé de vérification utilisant un composé mécano-luminescent réversible.

Cependant de tels matériaux sont généralement des composés organiques dérivés du pyrène ou de l'anthracène obtenus par des opérations de synthèse relativement lourdes ou encore des complexes de coordination à base de ligands étendus, produits par une synthèse en plusieurs étapes et de métaux tels que l'or, le platine ou l'iridium, par exemple. Ces métaux sont particulièrement onéreux, en conséquence de quoi la fabrication des composés décrits l'est également.

Les solutions existantes présentent des inconvénients.

### 3. Résumé de l'invention.

L'invention permet d'améliorer l'état de l'art en proposant un matériau comprenant un premier composé et un second composé. Ces premier et second composés comprennent un groupement bi-pyridine ou pyridine comprenant lui-même un groupe N-oxyde. Le groupe N-oxyde est lié à un cation métallique de type ns² du groupe p. Selon l'invention, le second composé est obtenu à partir d'un composé identique au premier composé, par une opération de broyage. Ainsi, le premier composé broyé constitue le second composé.

Selon un mode de réalisation, le matériau comprend en outre un troisième composé obtenu à partir du second composé soumis à une élévation de température prédéterminée.

Selon une variante, le troisième composé du matériau est obtenu à partir du second composé soumis à de la vapeur d'eau.

Selon une autre variante, le troisième composé est obtenu à partir du second composé soumis à de la vapeur d'un solvant organique ou directement du solvant organique, de type acétonitrile ou acétone.

L'invention concerne également un procédé (méthode) de fabrication d'un matériau comprenant un premier composé et un second composé, les premier et second composés comprenant chacun un groupement bi-pyridine ou pyridine comprenant lui-même un groupe N-oxyde, le groupe N-oxyde étant lié à un cation métallique de type ns² du groupe p, et le procédé de fabrication étant caractérisé en ce qu'il comporte :
- une synthèse en vue d'obtenir le premier composé, et,
- une opération de broyage d'une partie du premier composé obtenu en vue d'obtenir le second composé par amorphisation totale ou partielle.

Avantageusement, les deux composés ainsi obtenus possèdent alors des caractéristiques de photoluminescence différentes, notamment quand ils sont soumis à un rayonnement ultra-violet.

### 4. Liste des figures.

L'invention sera mieux comprise, et d'autres particularités et avantages apparaîtront à la lecture de la description qui va suivre, la description faisant référence aux dessins annexés parmi lesquels :
- la **figure 1** représente la structure de base d'un matériau comprenant un groupement bi-pyridine ou pyridine, comprenant lui-même un groupe N-oxyde, le groupe N-oxyde étant lié à un cation métallique de type ns² du groupe p.
- la **figure 2** représente la formule d'un ligand N-oxyde-4,4'-bipyridine, ici le N,N'-dioxyde-4,4'-bipyridine disponible commercialement, et utilisé pour l'obtention de la structure du polymère de coordination COMP1 représenté sur la figure 1.
- la **figure 3** est une représentation symbolique d'un motif unitaire du matériau MAT selon un mode de réalisation de l'invention.
- la **figure 4** symbolise deux matériaux obtenus successivement par la mise en œuvre d'un procédé d'obtention d'un matériau électroluminescent MAT selon un premier mode, particulier et non limitatif, de réalisation de l'invention.
- la **figure 5** symbolise trois matériaux obtenus successivement par la mise en œuvre d'un procédé d'obtention d'un matériau électroluminescent MAT selon un second mode, particulier et non limitatif, de réalisation de l'invention.

### 5. Description détaillée de modes de réalisation de l'invention.

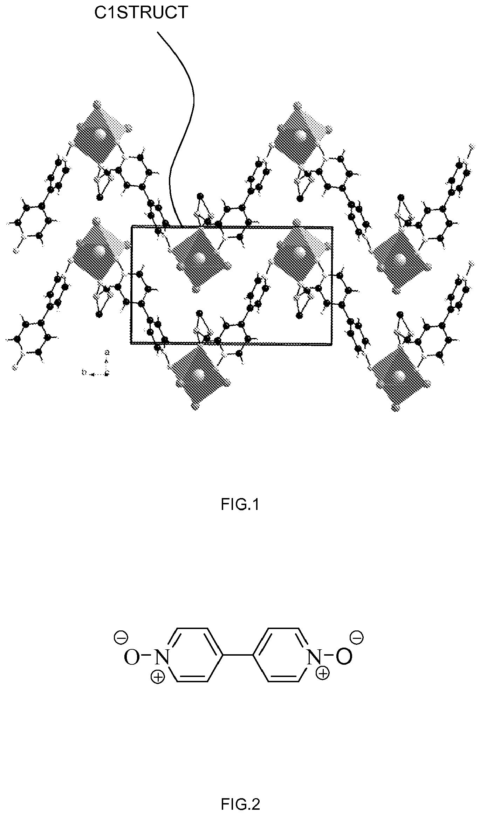

Sur les **figures 1 à 5****,** les modules représentés sont des unités fonctionnelles, qui correspondent ou non à des unités physiquement distinguables. Par exemple, ces modules ou certains d'entre eux sont regroupés dans un unique composant, ou constitués des fonctionnalités d'un même logiciel. *A contrario,* selon d'autres modes de réalisation, certains modules sont composés d'entités physiques séparées.

La **figure 1** représente une structure de base C1STRUCT (encadrée par un rectangle) d'un matériau comprenant un groupement bi-pyridine ou pyridine, comprenant lui-même un groupe N-oxyde, le groupe N-oxyde étant lié à un cation métallique de type ns² du groupe p. Cette structure C1STRUCT correspond à celle du premier composé COMP1 du matériau MAT selon un mode de réalisation particulier et non limitatif de l'invention.

Selon un mode de réalisation particulier et non limitatif de l'invention, le polymère de coordination représenté sur la figure 1, à base de N,N'-dioxyde-4,4'-bipyridine bismuth, est obtenu en dissolvant un équivalent du ligand N,N'-dioxyde-4,4'-bipyridine (représenté figure 2) dans 10 ml de dimethyl sulfoxide, en présence d'un équivalent du sel de bismuth BiBr₃.

La **figure 2** représente la formule d'un ligand N-oxyde-4,4'-bipyridine, le N,N'-dioxyde-4,4'-bipyridine disponible commercialement, et utilisé pour l'obtention de la structure du polymère de coordination COMP1 représenté sur la figure 1. Bien évidemment ce ligand n'est pas le seul susceptible d'être utilisé en vue de la préparation du composé COMP1 et des équivalents peuvent également être utilisés en vue de l'obtention du composé COMP1.

Avantageusement, la dissolution du ligand cité, disponible commercialement, dans le dimethyl sulfoxide et en présence de sel de bismuth, permet d'obtenir un milieu réactionnel adapté à la fabrication du composé COMP1 possédant la structure cristalline représentée figure 1. La préparation du composé COMP1 peut être réalisée, par exemple, en plaçant d'abord le milieu réactionnel obtenu dans un contenant, tel que, à titre d'exemple, un pilulier. Le polymère COMP1 peut ensuite être obtenu, après quelques jours, sous forme de cristaux, en plaçant ensuite le contenant dans un récipient de dimensions supérieures aux siennes, contenant de l'éthyl acetate, le tout étant scellé.

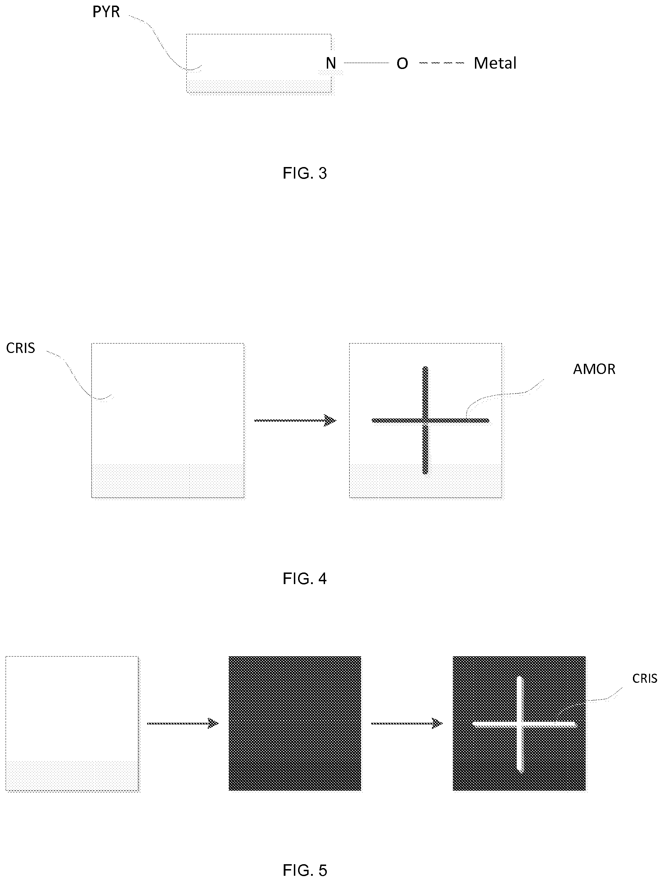

La **figure 3** est une représentation symbolique d'un motif unitaire du matériau composé COMP1 selon un mode de réalisation de l'invention. Le motif (la structure élémentaire) représenté est constitué d'un groupement bi-pyridine ou pyridine PYR comprenant lui-même un groupe N-oxyde N-O. Le groupe N-oxyde est lié à un cation métallique de type ns² du groupe p.

La **figure 4** symbolise deux matériaux obtenus successivement par la mise en œuvre d'un procédé d'obtention d'un matériau photoluminescent MAT selon un premier mode, particulier et non limitatif, de réalisation de l'invention. Le matériau représenté à gauche sur la figure 4 est le composé COMP1, caractérisé par sa structure cristalline CRIS, obtenu par des étapes de la méthode, tel que décrit ci-avant. Le matériau MAT, représenté à droite sur la figure 4 est obtenu à partir du matériau COMP1, en broyant partiellement (dans cet exemple) la surface du matériau COMP1. L'opération de broyage localisé, selon un motif (ou dessin) en forme de croix, entraine l'obtention d'une structure amorphe AMOR sur l'ensemble du motif ainsi réalisé.

En d'autres termes, le matériau MAT selon l'invention, représenté à droite sur la figure 4, comprend un premier composé COMP1, de structure cristalline CRIS et un second composé COMP2, obtenu par un broyage localisé, formant le composé COMP2 de structure amorphe AMOR selon un motif en forme de croix. Les composés COMP1 de structure CRIS et COMP2 de structure AMOR, comprennent chacun un groupement bi-pyridine ou pyridine PYR comprenant lui-même un groupe N-oxyde N-O. Le groupe N-oxyde N-O est lié à un cation métallique de type ns² du groupe p. La différence entre les composés COMP1 et COMP2 réside alors, du fait de l'opération de broyage réalisée, dans leurs structures respectives CRIS et AMOR.

Avantageusement, les composés COMP1 et COMP2 présentent conséquemment au broyage des caractéristiques de photoluminescence différentes, notamment sous rayonnement ultra-violet, du fait de leurs structures propres, créant astucieusement un contraste lorsque l'ensemble de l'élément est soumis à un rayonnement d'un type prédéfini.

La **figure 5** symbolise trois matériaux obtenus successivement par la mise en œuvre d'un procédé d'obtention d'un matériau photoluminescent MAT selon un second mode, particulier et non limitatif, de réalisation de l'invention. Le matériau représenté à gauche sur la figure 5 est le composé COMP1, caractérisé par sa structure cristalline CRIS, obtenu par des étapes de la méthode, tel précédemment décrit. Le matériau MAT, représenté au centre sur la figure 5 est obtenu à partir du matériau COMP1, en broyant l'ensemble de la surface du matériau COMP1. L'opération de broyage total de la surface, uniforme, entraine l'obtention d'une structure amorphe AMOR sur l'ensemble de la surface.

Le matériau MAT, représenté à droite sur la **figure 5** est obtenu à partir du composé COMP1, en broyant l'ensemble de sa surface alors faite du composé COMP2, puis en procédant à une élévation de température, une application de vapeur d'un solvant ou d'un solvant organique de type acétonitrile ou acétone, ou encore de vapeur d'eau, selon un motif en forme de croix dans l'exemple illustré sur la figure 5. Au centre, l'opération de broyage total de la surface de COMP1, uniforme, entraine l'obtention d'un composé COMP2 de structure amorphe AMOR sur l'ensemble de la surface. Puis, à droite, l'élévation de température localisée ou l'application localisée d'une vapeur de solvant ou d'un solvant selon un motif prédéterminé (ici en forme de croix) permet de générer avantageusement un contraste en recouvrant une structure cristalline CRIS à l'endroit du motif, similaire à la structure de départ (de COMP1). La structure semblable ainsi retrouvée constitue un troisième composé COMP3.

Avantageusement, les composés COMP1 et COMP2 ont, du fait de l'application d'un contrainte mécanique de type écrasement ou friction, par exemple (broyage), des caractéristiques de luminescence disparates.

Il en est de même pour les composés COMP2 et COMP3. Ainsi, un même élément peut porter une ou plusieurs inscriptions quelconques, pouvant être révélées à l'œil sous un rayonnement ultra-violet. Ces caractéristiques de luminescence permettent des applications d'authentification, de traçage, d'aide à la traçabilité, de lutte contre la contrefaçon.

Avantageusement, l'application d'un rayonnement ultra-violet sur un objet déformable permet de visualiser des gradients de luminescence représentatifs de contraintes mécaniques auxquelles l'objet a été précédemment soumis. Ce peut être le cas, à titre d'exemple, pour des tests et des évaluations dans des domaines aéronautiques (maquette en soufflerie), automobile, ou encore plus largement en résistance des matériaux. Dans cet esprit, l'application d'un composé aux propriétés semblables à celles du composé COMP1 en surface d'une maquette soumise à des efforts (contraintes mécaniques) entraîne la création sur la surface d'un matériau MAT selon l'invention puisque les efforts opèrent un broyage surfacique transformant, localement selon l'amplitude des efforts et selon la topologie de l'objet, le composé COMP1 en composé COMP2. La maquette alors soumise à un rayonnement ultra-violet est représentative des efforts auxquels elle a été soumise, du fait des gradients de luminescence créées et des disparités locales de réflexions. Le rayonnement ultra-violet révèle à l'œil une représentation des contraintes subies. Avantageusement, il est possible d'effacer ces gradients après étude ou analyse, par application d'une élévation de température ou d'un solvant, adapté au retour à une structure cristalline CRIS du matériau précédemment amorphisé selon une structure AMOR. Cette opération d'effacement transforme les zones de composé COMP2 en un composé COMP3 proche du composé COMP1 originel.

L'invention ne concerne pas le seul mode de réalisation décrit ci-avant mais concerne plus largement tout matériau comprenant un premier composé et un second composé comprenant tous deux un groupement bi-pyridine ou pyridine, lequel comprend lui-même un groupe N-oxyde, lié à un cation métallique de type ns² du groupe p, et caractérisé en ce que le second composé est obtenu à partir du premier composé, issue d'une opération de synthèse, par une opération de broyage (écrasement, pression, friction).

## Revendications

1. Matériau (MAT) comprenant un premier composé (COMP1) et un second composé (COMP2), lesdits premier et second composés (COMP1, COMP2) comprenant un groupement bi-pyridine ou pyridine (PYR) comprenant lui-même un groupe N-oxyde (N-O), ledit groupe N-oxyde (N-O) étant lié à un cation métallique de type ns² du groupe P, et ledit matériau (MAT) étant **caractérisé en ce que** ledit second composé (COMP2) est obtenu à partir d'un composé identique au premier composé (COMP1), broyé.

2. Matériau (MAT) selon la revendication 1, **caractérisé en ce qu'**il comprend en outre un troisième composé (COMP3) obtenu à partir dudit second composé (COMP2) soumis à une élévation de température prédéterminée.

3. Matériau selon la revendication 1, **caractérisé en ce qu'**il comprend en outre un troisième (COMP3) composé obtenu à partir dudit second composé (COMP2) soumis à de la vapeur d'eau.

4. Matériau selon la revendication 1, **caractérisé en ce qu'**il comprend en outre un troisième composé (COMP3) obtenu à partir dudit second composé (COMP2) soumis à une vapeur de solvant organique ou directement à un solvant organique de type acétonitrile ou acétone.

5. Procédé de fabrication d'un matériau (MAT) comprenant un premier composé (COMP1) et un second composé (COMP2), lesdits premier et second composés comprenant chacun un groupement bi-pyridine ou pyridine (PYR) comprenant lui-même un groupe N-oxyde (N-O), ledit groupe N-oxyde (N-O) étant lié à un cation métallique de type ns² du groupe p, et ledit procédé de fabrication étant **caractérisé en ce qu'**il comporte :
- une synthèse en vue d'obtenir ledit premier composé (COMP1),
- une opération de broyage d'une partie dudit premier composé (COMP1) obtenu en vue d'obtenir ledit second composé (COMP2) par une amorphisation totale ou partielle.

## Patentansprüche

1. Material (MAT), umfassend eine erste Verbindung (COMP1) und eine zweite Verbindung (COMP2), wobei die erste und zweite Verbindung (COMP1, COMP2) eine Bi-Pyridin- oder Pyridin-Gruppierung (PYR) umfassen, ihrerseits eine N-Oxyd-Gruppe (N-O) umfassend, wobei die N-Oxyd-Gruppe (N-O) an ein metallisches Kation des Typs ns² der P-Gruppe gebunden ist, und wobei das Material (MAT) **dadurch gekennzeichnet ist, dass** die zweite Verbindung (COMP2) aus einer mit der ersten Verbindung (COMP1) identischen Verbindung gewonnen wird, die zerkleinert wird.

2. Material (MAT) nach Anspruch 1, **dadurch gekennzeichnet, dass** es weiter eine dritte Verbindung (COMP3) umfasst, gewonnen aus der zweiten Verbindung (COMP2), die einer vorher festgelegten Temperaturerhöhung ausgesetzt wird.

3. Material nach Anspruch 1, **dadurch gekennzeichnet, dass** es weiter eine dritte Verbindung (COMP3) umfasst, gewonnen aus der zweiten Verbindung (COMP2), die Wasserdampf ausgesetzt wird.

4. Material nach Anspruch 1, **dadurch gekennzeichnet, dass** es weiter eine dritte Verbindung (COMP3) umfasst, gewonnen aus der zweiten Verbindung (COMP2), die einem Dampf aus organischem Lösungsmittel oder direkt einem organischen Lösungsmittel vom Typ Acetonitril oder Aceton ausgesetzt wird.

5. Verfahren zur Herstellung eines Materials (MAT), umfassend eine erste Verbindung (COMP1) und eine zweite Verbindung (COMP2), wobei die erste und zweite Verbindung jeweils eine Bi-Pyridin- oder Pyridin-Gruppierung (PYR) umfassen, ihrerseits eine N-Oxyd-Gruppe (N-O) umfassend, wobei die N-Oxyd-Gruppe (N-O) an ein metallisches Kation des Typs ns² der p-Gruppe gebunden ist, und wobei das Herstellungsverfahren **dadurch gekennzeichnet ist, dass** es Folgendes umfasst:
- eine Synthese zum Gewinnen der ersten Verbindung (COMP1),
- einen Zerkleinerungsvorgang eines Teils der ersten Verbindung (COMP1), gewonnen zum Gewinnen der zweiten Verbindung (COMP2) durch eine vollständige oder teilweise Amorphisierung.

## Claims

1. Material (MAT) comprising a first compound (COMP1) and a second compound (COMP2), said first and second compounds (COMP1, COMP2) comprising a bi-pyridine or pyridine group (PYR) comprising itself an N-oxide (N-O) group, said N-oxide (N-O) group being bound to a metal cation of the ns² type of the P group, and said material (MAT) being **characterised in that** said second compound (COMP2) is obtained from a compound identical to the first compound (COMP1), ground.

2. Material (MAT) according to claim 1, **characterised in that** it further comprises a third compound (COMP3) obtained from said second compound (COMP2) subjected to a predetermined rise in temperature.

3. Material according to claim 1, **characterised in that** it further comprises a third (COMP3) compound obtained from said second compound (COMP2) subjected to steam.

4. Material according to claim 1, **characterised in that** it further comprises a third compound (COMP3) obtained from said second compound (COMP2) subjected to an organic solvent vapour or directly to an organic solvent of the acetonitrile or acetone type.

5. Method for manufacturing a material (MAT) comprising a first compound (COMP1) and a second compound (COMP2), said first and second compounds each comprising a bi-pyridine or pyridine group (PYR) comprising itself an N-oxide (N-O) group, said N-oxide (N-O) group being bound to a metal cation of the ns² type of the p group, and said method of manufacturing being **characterised in that** it comprises:
- a synthesis for the purpose of obtaining said first compound (COMP1),
- a grinding operation of a portion of said first compound (COMP1) obtained for the purpose of obtaining said second compound (COMP2) via partial or total amorphisation.
